# EUROPEAN PATENT SPECIFICATION

(11) **EP 4 148 822 B1**
(45) Date of publication and mention of the grant of the patent: **08.05.2024**
(21) Application number: 22194709.6
(22) Date of filing: 08.09.2022
(51) Int. Cl.: H01M 4/133, H01M 4/134, H01M 4/1393, H01M 4/1395, H01M 4/36, H01M 4/38, H01M 4/587, H01M 4/62, H01M 4/02

(54) **NEGATIVE ACTIVE MATERIAL AND RECHARGEABLE LITHIUM BATTERY INCLUDING SAME**
NEGATIVES AKTIVMATERIAL UND WIEDERAUFLADBARE LITHIUMBATTERIE DAMIT
MATÉRIAU ACTIF NÉGATIF ET BATTERIE AU LITHIUM RECHARGEABLE LE COMPRENANT

(30) Priority: 09.09.2021 KR 20210120602
(43) Date of publication of application: 15.03.2023
(73) Proprietor: Samsung SDI Co., Ltd., Gyeonggi-do (KR)
(72) Inventor: LEE, Eunjoo, 17084 Yongin-si (KR); KIM, Yongseok, 17084 Yongin-si (KR); KIM, Jaewon, 17084 Yongin-si (KR); NAH, Jaehou, 17084 Yongin-si (KR); SHEEM, Kyeu Yoon, 17084 Yongin-si (KR)
(74) Representative: Taor, Simon Edward William

(56) References cited:
- US-A1- 2017 352 878
- US-A1- 2020 295 352

## Description

### BACKGROUND OF THE INVENTION

### (a) Field of the Invention

It relates to a negative active material and a rechargeable lithium battery including the same.

### (b) Description of the Related Art

Electric vehicle and ESS (energy storage system) market expansion requires high-capacity and high efficiency batteries, and studies for using a silicon-based material as a negative active material of the battery have been undertaken. The silicon-based negative active material has advantageous for exhibiting high-capacity and high efficiency, but has shortcoming related to a volume expansion during charge and discharge.

For overcoming these shortcomings, combining a material with a carbon matrix, a silicon oxide, or a silicon alloy has been attempted. The above information disclosed in this Background section is only for enhancement of understanding of the background of the invention, and therefore it may contain information that does not form the prior art that is already known in this country to a person of ordinary skill in the art.

US 2020/295352 A1 discloses a negative active material comprising silicon, silicon oxide and magnesium silicate as well as a carbon containing coating layer. US 2017/352878 A1 discloses a silicon carbon composite material and a method for producing the same.

### SUMMARY OF THE INVENTION

According to an aspect of the invention, there is provided a negative active material as set out in claim 1. One embodiment provides a negative active material for a rechargeable lithium battery being capable of improving initial efficiency and cycle-life characteristics.

Another embodiment provides a rechargeable lithium battery including the negative active material.

One embodiment provides a negative active material for a rechargeable lithium battery including a porous silicon-carbon composite including silicon, carbon, and magnesium silicate (MgSiOs) and pores, and having a diffraction peak intensity ratio I_{MgSiO3(610)}/I_{Si(111)} of 0.001 < I_{MgSiO3(610)}/I_{Si(111)} < 0.01, which is a ratio of a diffraction peak intensity I_{MgSiO3(610)} by MgSiOs at 2θ = 30° to 32° to a diffraction peak intensity I_{Si(111)} by Si(111) detected at 2θ = 27.5° to 29.5° in an X-ray diffraction analysis.

An amount of magnesium silicate may be about 0.01 wt% to about 1.0 wt%, or about 0.01 wt% to about 0.6 wt% based on the total 100 wt% of the negative active material.

The carbon may be an amorphous carbon and the amorphous carbon may be soft carbon, hard carbon, or a combination thereof.

An amount of the carbon may be about 5 wt% to about 45 wt% based on the total weight of the negative active material.

The silicon-carbon composite may include pores and the carbon may be covered on an exterior wall of pores, silicon, and magnesium silicate.

The pores may have an average size of about 50 nm or more, or about 50 nm to about 500 nm.

The negative active material may be prepared by primarily heat-treating magnesium silicide to prepare a heated product, etching the heated product to prepare a porous silicon, mixing the porous silicon with an amorphous carbon precursor to prepare a mixture, and secondarily heat-treating the mixture.

The primary heat treatment may be performed under an air atmosphere. The primary heat treatment may be performed at about 600 °C to about 700°C for about 5 hours to about 30 hours.

The etching may be performed using an acid. The acid may be hydrochloric acid.

A mixing ratio of the porous silicon and the amorphous carbon precursor may be about 95:5 to about 55:45 by weight ratio.

The secondary heat treatment may be performed at about 800 °C to about 1200 °C.

Another embodiment provides a rechargeable lithium battery including a negative electrode including the negative active material, a positive electrode including a positive active material, and a non-aqueous electrolyte.

The negative electrode may further include the negative active material as a first negative active material and a crystalline carbon as a second negative active material. A mixing ratio of the first negative active material and the second negative active material may be about 1 : 99 to about 40 : 60 weight ratio.

According to an aspect, there is provided a negative active material as set out in claim 1. Additional features are set out in claims 2 to 12. According to an aspect, there is provided a rechargeable lithium battery as set out in claim 13. Additional features are set out in claims 14 and 15.

Other embodiments are included in the following detailed description. The negative active material for a rechargeable lithium battery according to one embodiment may exhibit excellent initial efficiency and cycle-life characteristics.

### BRIEF DESCRIPTION OF THE DRAWING

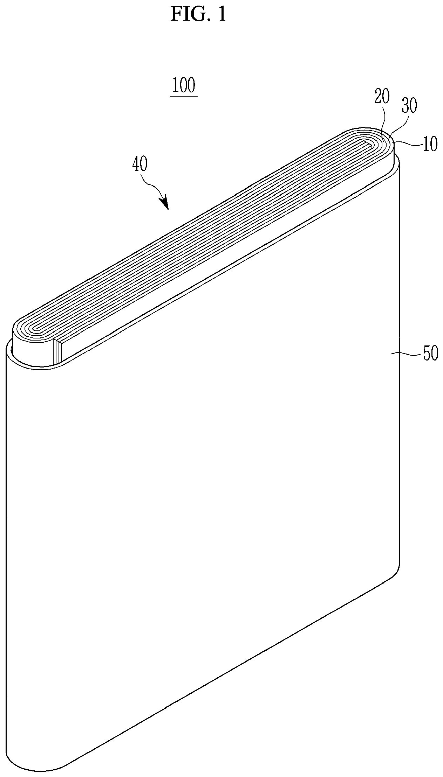

FIG. 1 is a schematic view showing the structure of a rechargeable lithium battery according to an embodiment.

### DETAILED DESCRIPTION OF THE INVENTION

Hereinafter, embodiments are described in detail. However, these embodiments are only examples, so the present invention is not limited thereto and the present invention is defined by the scope of claims.

A negative active material for a rechargeable lithium battery includes a porous silicon-carbon composite and the porous silicon-carbon composite includes silicon, carbon, and magnesium silicate (MgSiOs).

The negative active material may have a diffraction peak intensity ratio I_{MgSiO3(610)}/I_{Si(111)} of 0.001 < I_{MgSiO3(610)}/I_{Si(111)} < 0.01, which is a ratio of a diffraction peak intensity I_{MgSiO3(610)} by MgSiOs at 2θ = 30° to 32° to a diffraction peak intensity I_{Si(111)} by Si(111) detected at 2θ = 27.5° to 29.5° in X-ray diffraction analysis. According to one embodiment, when the diffraction peak intensity ratio, I_{(MgSiO3(610)}/I_{Si(111)} of the negative active material fallen into the range, the improved initial efficiency and cycle-life characteristics may be exhibited. If the peak intensity ratio, I_{MgSiO3(610)}/I_{Si(111)} is 0.001 or less, or 0.01 or more, the initial efficiency may be deteriorated and the cycle-life characteristics may also be deteriorated.

The X-ray diffraction analysis may be measured by using a CuKα ray as a target ray.

The negative active material according to one embodiment may be include magnesium silicate (MgSiOs) at an amount of about 0.01 wt% to about 1.0 wt% based on the total 100 wt% of the negative active material, or according to another embodiment, about 0.01 wt% to about 0.6 wt%. When the amount of magnesium silicate is within the range, the charge and discharge efficiency and the cycle-life characteristics may be improved.

In the negative active material according to one embodiment, magnesium silicate may be discontinuously and randomly presented on a surface of the active material rather than continuously presented on the surface of the active material.

In one embodiment, the carbon may be amorphous carbon. When the carbon included in the silicon-carbon composite is the amorphous carbon, it may be uniformly coated on silicon, so the conductivity may be further improved, and power may be excellent, compared to crystalline carbon. An amount of the amorphous carbon may be about 5 wt% to about 45 wt% based on the total weight of the negative active material.

The amorphous carbon may be soft carbon, hard carbon, or a combination thereof.

In the negative active material, the silicon-carbon composite is a porous silicon-carbon composite and may have pores of which an average size is about 50 nm or more, or about 50 nm to about 500 nm. According to one embodiment, the pore may have an average size of about 50 nm to about 100 nm. The silicon-carbon composite includes pores which may cause effective inhibition of the volume expansion of silicon generated during charging and discharging using the negative active material. This is because the included pores absorb the expanded volume, thereby suppressing the expansion of the total volume of the negative active material. The effects by suppressing the volume expansion due to pores may be more effectively obtained from pore average size of about 50 nm or more.

In one embodiment, the pore size may be measured by a nitrogen adsorption method (BJH method), mercury porosimetry, etc.

The negative active material according to one embodiment may have a structure which includes pores inside and carbon covered with an exterior wall of pore, silicon, and magnesium silicate.

The negative active material according to one embodiment may prepared by the following procedures.

Magnesium silicide (Mg₂Si) may be primarily heat-treated under an air atmosphere. The primary heat treatment may be performed at about 600 °C to about 700 °C. The primary heat treatment may be performed for about 5 hours to about 30 hours.

The primary heat-treatment oxidizes magnesium silicide to generate MgO and Si, and partially converts magnesium silicate, MgSiOs.

The generation of magnesium silicate from the primary heat treatment may be obtained under the air atmosphere and the heat-treatment under N₂ or CO₂ to not generate MgSiOs which is not desired.

Furthermore, when the heat treatment is performed at a temperature out of the range, Mg₂Si may remain and the side-reaction may occur. In addition, when the heat treatment may be performed under the condition, a negative active material including magnesium silicate at a desired amount may be suitably prepared.

Thereafter, the heat treatment product may be etched using an acid. This procedure may be performed by immersing the heat-treated product in the acid. After etching, it may be filtrated to obtain an etched product. In the etching procedure, the generated MgO is dissolved in the acid, and thus, the etched product may be formed in the form of a porous silicon.

The acid may be hydrochloric acid.

Thereafter, the formed porous silicon may be mixed with an amorphous carbon precursor.

The amorphous carbon precursor may be petroleum-based cokes, coal-based cokes, petroleum-based pitch, coal-based pitch, green cokes, or a combination thereof.

A mixing ratio of the porous silicon and the amorphous carbon precursor may be about 95:5 to about 55:45 by weight ratio.

As such, the mixing of the porous silicon and the amorphous carbon precursor may control the generated pore to be a desired size. In particular, when the mixing ratio of the porous silicon and the amorphous carbon precursor satisfies the range, the obtained pore size may be controlled to be about 50 nm or more, and according to one embodiment, about 50 nm or more and about 500 nm or less.

The mixture may be secondarily heat-treated to prepare a negative active material. The secondary heat-treatment may be performed at about 800 °C to about 1200 °C.

According to the secondary heat-treatment, the amorphous carbon precursor may be converted to an amorphous carbon which may be included in the final product, as an amorphous carbon.

Another embodiment provides a rechargeable lithium battery including a negative electrode, a positive electrode, and an electrolyte.

The negative electrode may include a current collector and a negative active material layer including the negative active material according to one embodiment.

The negative active material layer may further include a crystalline carbon negative active material. The crystalline carbon negative active material may be unspecified shaped, sheet-shaped, flake-shaped, spherically-shaped, or fiber-shaped natural graphite or artificial graphite.

When the negative active material layer includes the negative active material according to one embodiment as a first negative active material, and crystalline carbon negative active material as a second negative active material, the first negative active material is positioned between the second negative active material particles to well contact with the second negative active material, thereby more effectively inhibit the expansion of the negative electrode. Herein, the mixing ratio of the first negative active material : the second negative active material may be about 1 : 99 to about 40 : 60 weight ratio. When the first negative active material and the second negative active material are mixed and used at the range, the current density of the negative electrode may be further improved and the thin film electrode may be prepared. Furthermore, the first negative active material including silicon in the negative electrode may be more uniformly presented, and thus, the negative electrode expansion may be more effectively suppressed.

In the negative active material layer, the amount of the negative active material may be about 95 wt% to about 99 wt% based on the total weight of the negative active material layer.

The negative active material layer may include a binder, and may further include a conductive material. In the negative active material layer, the amount of the binder may be about 1 wt% to about 5 wt% based on the total weight of the negative active material layer. Furthermore, when the conductive material is further included, about 90 wt% to about 98 wt% of the negative active material, about 1 wt% to about 5 wt% of the binder, and about 1 wt% to about 5 wt% of the conductive material may be used.

The binder improves binding properties of negative active material particles with one another and with a current collector. The binder may be a non-aqueous binder, an aqueous binder, or a combination thereof.

The non-aqueous binder may be ethylene propylene copolymer, polyacrylonitrile, polystyrene, polyvinylchloride, carboxylated polyvinylchloride, polyvinylfluoride, polyurethane, polytetrafluoro ethylene, polyvinylidene fluoride, polyethylene, polypropylene, polyamide imide, polyimide, or a combination thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polyepichlorohydrin, polyphosphazene, an ethylene propylene diene copolymer, polyvinylpyridine, chlorosulfonated polyethylene, latex, polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but embodiments are not limited thereto.

The negative electrode according one embodiment may be prepared by mixing the negative active material, the binder and optionally, the conductive material in a solvent to prepare an active material composition and coating the active material composition on the current collector. The solvent may be water.

Since such a method for forming an active material layer is widely known in the art, a detailed description thereof will be omitted herein.

The positive electrode may include a current collector and a positive active material layer formed on the current collector.

The positive active material may include lithiated intercalation compounds that reversibly intercalate and deintercalate lithium ions, specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D¹₂ (0.90 ≤ a≤1.8, 0 ≤ b≤ 0.5); LiₐA_{1-b}X_{b}O_{2-c1}D¹_{c1} (0.90 ≤ a ≤ 1.8, 0 ≤ b ≤ 0.5, 0 ≤ c1 ≤ 0.05); LiₐE_{1-b}X_{b}O_{2-c1}D¹_{c1} (0.90 ≤ a ≤ 1.8, 0 ≤ b ≤ 0.5, 0 ≤ c1 ≤ 0.05); LiₐE_{2-b}X_{b}O_{4-c1}D¹_{c1} (0.90 ≤ a ≤ 1.8, 0 ≤ b ≤ 0.5, 0 ≤ c1 ≤ 0.05); LiₐNi_{1-b-c}Co_{b}X_{c}D¹ₐ (0.90 ≤a ≤ 1.8, 0 ≤ b ≤ 0.5, 0 ≤ c≤ 0.5, 0 < a =2); LiₐNi_{1-b-c}Co_{b}X_{c}O₂₋ₐTₐ (0.90 ≤ a≤ 1.8, 0 ≤ b ≤ 0.5, 0 ≤ c ≤ 0.5, 0 < a < 2); LiₐNi_{1-b-c}Co_{b}X_{c}O₂₋ₐT₂ (0.90 ≤ a≤ 1.8, 0 ≤ b ≤0.5, 0 ≤ c ≤ 0.5, 0 < a < 2); LiₐNi_{1-b-c}Mn_{b}X_{c}D¹ₐ (0.90 ≤ a ≤ 1.8, 0 ≤ b ≤ 0.5, 0 ≤ c ≤ 0.5, 0 < a ≤2); LiₐNi_{1-b-c}Mn_{b}X_{c}O₂₋ₐTₐ (0.90 ≤ a ≤ 1.8, 0 ≤ b ≤ 0.5, 0 ≤ c ≤ 0.5, 0 < a < 2); LiₐNi_{1-b-c}Mn_{b}X_{c}O₂₋ₐT₂ (0.90 ≤ a≤ 1.8, 0 ≤ b ≤0.5, 0 ≤ c ≤0.5, 0 < a < 2); LiₐNi_{b}E_{c}G_{d}O₂ (0.90 ≤ a ≤ 1.8, 0 ≤ b ≤ 0.9, 0 ≤c ≤ 0.5, 0.001 ≤ d ≤ 0.1); LiₐNi_{b}Co_{c}Mn_{d}GₑO₂ (0.90 ≤ a ≤ 1.8, 0 ≤ b≤ 0.9, 0 ≤ c ≤ 0.5, 0 ≤ d ≤ 0.5, 0.001 ≤e ≤ 0.1); LiₐNiG_{b}O₂ (0.90 ≤ a ≤ 1.8, 0.001 ≤b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤1.8, 0.001 ≤ b≤ 0.1); LiₐMn_{1-g}G_{g}PO₄ (0.90 ≤ a ≤ 1.8, 0 ≤ g ≤ 0.5); QO₂; QS₂; LiOS₂; V₂O₅; LiV₂O₅; LiZO₂; LiNiVO₄; Li _{(3-f)}J₂(PO₄)₃ (0≤ f≤=2); Li _{(3-f)}Fe₂(PO₄)₃ (0 ≤ f≤ 2); LiₐFePO₄ (0.90 ≤ a ≤ 1.8).

In the above chemical formulae, A is selected from Ni, Co, Mn, and a combination thereof; X is selected from Al, Ni, Co, Mn, Cr, Fe, Mg, Sr, V, a rare earth element, and a combination thereof; D¹ is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound, and for example, the method may include any coating method such as spray coating, dipping, and the like, but is not illustrated in more detail since it is well-known in the related field.

In the positive electrode, a content of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but embodiments are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but embodiments are not limited thereto.

The positive active material layer and the negative active material layer may be prepared by mixing an active material, a binder and optionally, a conductive material in a solvent to prepare an active material composition and coating the active material composition on a current collector. Such the active material layer preparation will be known in the related arts and the detailed description is omitted in the specification. The solvent may be N-methyl pyrrolidone, but embodiments are not limited thereto. Furthermore, if the aqueous binder is used in the negative active material layer, the solvent may be water as a solvent used in the negative active material composition preparation.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone, and the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance, and it may be well known to those skilled in the related art.

Furthermore, the carbonate-based solvent may desirably include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

When the non-aqueous organic solvents are mixed and used, a mixed solvent of a cyclic carbonate and a linear carbonate, a mixed solvent of a cyclic carbonate and a propionate-based solvent, or a mixed solvent of a cyclic carbonate, a linear carbonate and a propionate-based solvent may be used. The propionate-based solvent may include methyl propionate, ethyl propionate, propyl propionate, or a combination thereof.

Herein, when a mixture of a cyclic carbonate and a linear carbonate, or a mixture of a cyclic carbonate and a propionate-based solvent is used, it may be desirable to use it with a volume ratio of about 1:1 to about 1:9 considering the performances. Furthermore, a cyclic carbonate, a linear carbonate, and a propionate-based solvent may be mixed and used at a volume ratio of 1:1:1 to 3:3:4. The mixing ratios of the solvents may be appropriately adjusted according to desirable properties.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

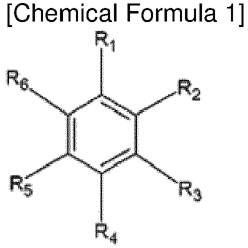

In Chemical Formula 1, R₁ to R₆ are the same or different and may each be selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, an ethylene carbonate-based compound represented by Chemical Formula 2 as an additive for improving cycle life.

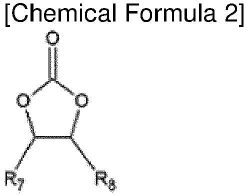

In Chemical Formula 2, R₇ and R₈ are the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The electrolyte may further include vinylethylene carbonate, propane sultone, succinonitrile, or a combination thereof, and the used amount may be suitably controlled.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), wherein x and y are natural numbers, for example, an integer of 1 to 20, LiCl, Lil and LiB (C₂O₄)₂(lithium bis(oxalato) borate: LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment. The rechargeable lithium battery according to an embodiment is illustrated as a prismatic battery but embodiments are not limited thereto and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

Magnesium silicide (Mg₂Si) was primarily heat-treated at 610 °C for 20 hours under an air atmosphere.

Thereafter, the heat-treated product was added to hydrochloric acid to etch, and then filtered to obtain an etching product, i.e. porous silicon.

The obtained porous silicon was mixed with petroleum pitch as an amorphous carbon precursor at a ratio in order to have an amount of amorphous carbon in the final negative active material shown in Table 3.

The resulting mixture was secondarily heat-treated at 1000 °C to prepare a negative active material. The produced negative active material had pores with an average size of 50 nm inside, and included silicon and magnesium silicate and a soft carbon coating on the pore, silicon, and magnesium silicate.

The negative active material was used as a first negative active material, and natural graphite was used as a second negative active material, and the first negative active material, the second negative active material, a styrene butadiene rubber binder, and carboxymethyl cellulose as a thickener were mixed at a 12:85.5:1.5:1.0 weight ratio in a water solvent to prepare a negative active material slurry. Herein, the mixing ratio of the styrene butadiene rubber binder and the carboxymethyl cellulose thickener was to be a 60 : 40 by weight ratio.

The negative active material slurry was coated on a Cu foil current collector and dried by the general procedure to prepare a negative electrode including the current collector and a negative active material layer formed on the current collector.

Using the negative electrode, a LiCoO₂ positive electrode, and an electrolyte, a rechargeable lithium cell was fabricated. As the electrolyte, 1.5M LiPF₆ dissolved in a mixed solvent of ethylene carbonate and ethylmethyl carbonate and dimethyl carbonate (20:10:70 volume ratio) was used.

### (Example 2)

A negative active material was prepared by the same procedure as in Example 1, except that the primarily heat-treatment was performed at 600 °C. Using the negative active material, a negative electrode and a rechargeable lithium cell were fabricated by the same procedure as in Example 1.

### (Example 3)

A negative active material was prepared by the same procedure as in Example 1, except that the primary heat-treatment was performed at 620 °C. Using the negative active material, a negative electrode and a rechargeable lithium cell were fabricated by the same procedure as in Example 1.

### (Example 4)

A negative active material was prepared by the same procedure as in Example 1, except that the primary heat-treatment was performed for 10 hours. Using the negative active material, a negative electrode and a rechargeable lithium cell were fabricated by the same procedure as in Example 1.

### (Example 5)

A negative active material was prepared by the same procedure as in Example 1, except that the primary heat-treatment was performed for 15 hours. Using the negative active material, a negative electrode and a rechargeable lithium cell were fabricated by the same procedure as in Example 1.

### (Example 6)

A negative active material was prepared by the same procedure as in Example 1, except that the primary heat-treatment was performed for 30 hours. Using the negative active material, a negative electrode and a rechargeable lithium cell were fabricated by the same procedure as in Example 1.

### (Example 7)

A negative active material was prepared by the same procedure as in Example 1, except that the primary heat-treatment was performed for 25 hours. Using the negative active material, a negative electrode and a rechargeable lithium cell were fabricated by the same procedure as in Example 1.

### (Example 8)

A negative active material was prepared by the same procedure as in Example 1, except that the primary heat-treatment was performed at 615 °C. Using the negative active material, a negative electrode and a rechargeable lithium cell were fabricated by the same procedure as in Example 1.

### (Example 9)

A negative active material was prepared by the same procedure as in Example 1, except that the primary heat-treatment was performed for 5 hours. Using the negative active material, a negative electrode and a rechargeable lithium cell were fabricated by the same procedure as in Example 1.

### (Comparative Example 1)

A negative active material was prepared by the same procedure as in Example 1, except that the primarily heat-treatment was performed at 550 °C. Using the negative active material, a negative electrode and a rechargeable lithium cell was fabricated by the same procedure as in Example 1.

### (Comparative Example 2)

A negative active material was prepared by the same procedure as in Example 1, except that the primary heat-treatment was performed at 560 °C. Using the negative active material, a negative electrode and a rechargeable lithium cell were fabricated by the same procedure as in Example 1.

### (Comparative Example 3)

A negative active material was prepared by the same procedure as in Example 1, except that the primary heat-treatment was performed at 570 °C. Using the negative active material, a negative electrode and a rechargeable lithium cell were fabricated by the same procedure as in Example 1.

### (Comparative Example 4)

A negative active material was prepared by the same procedure as in Example 1, except that the primarily heat-treatment was performed at for 1 hour. Using the negative active material, a negative electrode and a rechargeable lithium cell was fabricated by the same procedure as in Example 1.

### (Comparative Example 5)

A negative active material was prepared by the same procedure as in Example 1, except that the primary heat-treatment was performed at 710 °C. Using the negative active material, a negative electrode and a rechargeable lithium cell were fabricated by the same procedure as in Example 1.

### (Comparative Example 6)

A negative active material was prepared by the same procedure as in Example 1, except that magnesium silicide (Mg₂Si) was primary heat-treated at 610 °C for 20 hours under a nitrogen atmosphere. Using the negative active material, a negative electrode and a rechargeable lithium cell were fabricated by the same procedure as in Example 1.

### (Comparative Example 7)

A negative active material was prepared by the same procedure as in Example 1, except that magnesium silicide (Mg₂Si) was primary heat-treated at 610 °C for 20 hours under a CO₂ atmosphere. Using the negative active material, a negative electrode and a rechargeable lithium cell were fabricated by the same procedure as in Example 1.

The heat-treatment conditions for magnesium silicide in Examples 1 to 9 and Comparative Examples 1 to 7 are summarized in Table 1.

**Table 1**

| | Heat treatment temperature (°C) | Heat treatment time | Atmosphere |
|---|---|---|---|
| Example 1 | 610 | 20 | Air |
| Example 2 | 600 | 20 | Air |
| Example 3 | 620 | 20 | Air |
| Example 4 | 610 | 10 | Air |
| Example 5 | 610 | 15 | Air |
| Example 6 | 610 | 20 | Air |
| Example 7 | 610 | 25 | Air |
| Example 8 | 615 | 20 | Air |
| Example 9 | 610 | 5 | Air |
| Comparative Example 1 | 550 | 20 | Air |
| Comparative Example 2 | 560 | 20 | Air |
| Comparative Example 3 | 570 | 20 | Air |
| Comparative Example 4 | 610 | 1 | Air |
| Comparative Example 5 | 710 | 20 | Air |
| Comparative Example 6 | 610 | 20 | Nitrogen |
| Comparative Example 7 | 610 | 20 | CO₂ |

### Experimental Example 1) Physical properties evaluation

X-ray diffraction peak intensities of the negative active materials of Examples 1 to 9 and Comparative Examples 1 to 7 were measured using a CuKα-ray. The results are shown in Table 2. From the results, I_{(MgSiO3(610)}/I_{Si(111)} was obtained and the results are shown in Table 2.

The full width at half maximum, FWHM(111), of the diffraction peak of a (111) plane by X-ray diffraction using a CuKα-ray for Si included in the prepared negative active material was measured. The detailed measurement condition was as below:
Device: Malvern Panalytical (Xpert pro)
Wavelength: Kα=1.540598 Å
Scan rate: ~1.5 deg/min
2theta window: 20° - 80°

The results are shown in Table 2.

Furthermore, the crystalline size of the negative active material was measured. The results are shown in Table 2.

Pore sizes of the negative active materials according to Examples 1 to 9 and Comparative Examples 1 to 7 were measured by a nitrogen adsorption method (BET, BJH method). The results are shown in Table 2.

**Table 2**

| | Si(111) 2-theta (degrees) | Si(111) intensity | Si(111) FWHM | Crystalline size(nm) | MgSiO₃(610) 2-theta (degrees) | MgSiO₃(610) intensity | I_{MgSiO3( 610)}/I_{Si( 111)} | Average size of pore (nm) |
|---|---|---|---|---|---|---|---|---|
| Example 1 | 28.52 | 111866.4 | 0.254 | 32.27 | 30.75 | 135.4 | 0.00121 | 50 |
| Example 2 | 28.40 | 38483.4 | 0.252 | 32.52 | 30.63 | 173 | 0.0045 | 57 |
| Example 3 | 28.42 | 48274.8 | 0.221 | 37.09 | 30.67 | 182.3 | 0.00378 | 70 |
| Example 4 | 28.45 | 43867.7 | 0.232 | 35.33 | 30.67 | 226.9 | 0.00517 | 74 |
| Example 5 | 28.46 | 22359.2 | 0.24 | 34.15 | 30.69 | 110.7 | 0.00495 | 68 |
| Example 6 | 28.51 | 21288.4 | 0.247 | 33.19 | 30.77 | 124.3 | 0.00584 | 62 |
| Example 7 | 28.42 | 25013.4 | 0.269 | 30.47 | 30.59 | 94.8 | 0.00379 | 53 |
| Example 8 | 28.5 | 44627.1 | 0.251 | 32.7 | 30.78 | 45.2 | 0.00101 | 51 |
| Example 9 | 28.46 | 34519.6 | 0.233 | 35.1 | 30.66 | 311.1 | 0.009 | 66 |
| Comparative Example 1 | 28.45 | 34687.5 | 0.229 | 35.79 | 30.61 | 548.2 | 0.0158 | 19 |
| Comparative Example 2 | 28.40 | 47362.6 | 0.261 | 31.40 | 30.74 | 489.3 | 0.01033 | 32 |
| Comparative Example 3 | 28.51 | 25127.6 | 0.246 | 33.32 | 30.60 | 338.4 | 0.01347 | 31 |
| Comparative Example 4 | 28.43 | 27764.3 | 0.255 | 32.1 | 30.66 | 278.6 | 0.01 | 24 |
| Comparative Example 5 | 28.45 | 37153.2 | 0.243 | 33.7 | 30.74 | 37 | 0.001 | 46 |
| Comparative Example 6 | 28.5 | 24984.3 | 0.246 | 33.3 | - | - | 0 | 29 |
| Comparative Example 7 | 28.42 | 48337.9 | 0.26 | 31.5 | - | - | 0 | 30 |

As shown in Table 2, the active materials according to Examples 1 to 9 had a ratio (I_{MgSiO3(610)}/I_{Si(111)}) which fell into a range of 0.001 < I_{MgSiO3(610)}/I_{Si(111)} < 0.01, but Comparative Examples 1 to 5 had a ratio out of the range.

The negative active material according to Comparative Examples 6 and 7 had no peak related to MgSiOs which indicated no generation of MgSiOs.

### Experimental Example 2) Cell characteristics evaluation

The cells according to Examples 1 to 9 and Comparative Examples 1 to 7 were formation charged and discharged once at 0.1C, and the formation charge and discharge capacity was measured. The discharge capacity results are shown in Table 3. From the formation charge and discharge capacity, the initial efficiency was measured. The results are shown in Table 3.

The capacity of amorphous carbon was considered as 250 mAh/g, and the value corresponding to the amount of amorphous carbon included in the, negative active material was subtracted from the formation discharge capacity and then it was divided by the amount of silicon to obtain a formation silicon capacity. The results are shown in Table 3.

The cells according to Examples 1 to 7 and Comparative Examples 1 to 3 were charged and discharged at 1C for 50 cycles and the capacity ratio of 50^{th} discharge capacity to ate to 1^{st} discharge capacity was measured. The results are shown in Table 3, as cycle-life retention.

### Experimental Example 3) Amount of MaSiO₃

Amounts of MgSiOs in the negative active materials according to Examples 1 to 9 and Comparative Examples 1 to 7 were measured by an ICP analysis method. The results are shown in Table 3.

**Table 3**

| | Formation discharge capacity (mAh/g) | Initial efficiency (%) | Formation silicon capacity (mAh/g) | Cycle life-retention (%) | Amount of amorphous carbon to total 100 wt% of negative active material (wt%) | MgSiOs to total 100 wt% of negative active material (wt%) |
|---|---|---|---|---|---|---|
| Example 1 | 2406 | 85.2 | 2558 | 83 | 7 | 0.0167 |
| Example 2 | 1713 | 84.7 | 2730 | 85 | 41 | 0.0188 |
| Example 3 | 1781 | 85.9 | 2890 | 86 | 42 | 0.0312 |
| Example 4 | 2062 | 86.3 | 2718 | 84 | 27 | 0.0247 |
| Example 5 | 2261 | 86.2 | 2738 | 83 | 20 | 0.0149 |
| Example 6 | 1926 | 85.3 | 2644 | 84 | 30 | 0.0191 |
| Example 7 | 1845 | 85.7 | 2667 | 85 | 34 | 0.0113 |
| Example 8 | 1936 | 84.9 | 2498 | 84 | 25 | 0.0102 |
| Example 9 | 2108 | 86 | 2830 | 85 | 28 | 0.051 |
| Comparative Example 1 | 1861 | 81.2 | 2614 | 81 | 32 | 0.0884 |
| Comparative Example 2 | 1977 | 82.4 | 2776 | 78 | 32 | 0.0713 |
| Comparative Example 3 | 2052 | 81.7 | 2548 | 80 | 22 | 0.0457 |
| Comparative Example 4 | 1996 | 83.1 | 2190 | 81 | 10 | 0.0623 |
| Comparative Example 5 | 2231 | 82.8 | 3080 | 79 | 30 | 0.0124 |
| Comparative Example 6 | 2167 | 82.9 | 2876 | 82 | 27 | - |
| Comparative Example 7 | 2012 | 83.2 | 2767 | 82 | 30 | - |

As shown in Table 3, the cells including the negative active materials according to Examples 1 to 9 which had the ratio (I_{MgSiO3(610)}/I_{Si(111)}) of 0.001 < I_{MgSiO3 610}/I_{Si 111} < 0.01 exhibited excellent initial efficiency and capacity retention, but the cells including the negative active materials according to Comparative Examples 1 to 7 which had the ratio (I_{MgSiO3(610)}/I_{Si( 111)}) out of 0.001 < I_{MgSiO3 610}/I_{Si 111} < 0.01 exhibited deteriorated intial efficiency and cycle-life-retention.

As discussed, embodiments provide a negative active material for a rechargeable lithium battery, comprising a porous silicon-carbon composite comprising silicon, carbon and magnesium silicate MgSiO₃, having a diffraction peak intensity ratio I_{MgSiO3(610)}/I_{Si(111)} of from 0.001 to 0.01, wherein I_{MgSiO3(610)}/I_{Si(111)} is a diffraction peak intensity I_{MgSiO3(610)} by MgSiO₃ at 2θ = 30° to 32° to a diffraction peak intensity I_{Si(111)} by Si(111) detected at 2θ = 27.5° to 29.5° in an X-ray diffraction analysis. Embodiments may also provide a negative active material including the negative active material of any embodiment.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be examples and not limiting the present invention in any way.

## Claims

1. A negative active material for a rechargeable lithium battery, comprising
a porous silicon-carbon composite comprising silicon, carbon and magnesium silicate, MgSiOs,
having a diffraction peak intensity ratio I_{MgSiO3(610)}/I_{Si(111)} of 0.001 < I_{MgSiO3(610)}/I_{Si(111)} < 0.01, which is a ratio of a diffraction peak intensity I_{MgSiO3(610)} by MgSiOs at 2θ = 30° to 32° to a diffraction peak intensity I_{Si(111)} by Si(111) detected at 2θ = 27.5° to 29.5° in an X-ray diffraction analysis.

2. The negative active material for a rechargeable lithium battery of claim 1, wherein an amount of magnesium silicate is about 0.01 wt% to about 1.0 wt%, or about 0.01 wt% to about 0.6 wt% based on the total 100 wt% of the negative active material.

3. The negative active material for a rechargeable lithium battery of claim 1 or 2, wherein the carbon includes amorphous carbon.

4. The negative active material for a rechargeable lithium battery of claim 3, wherein the amorphous carbon includes soft carbon, hard carbon, or a combination thereof.

5. The negative active material for a rechargeable lithium battery of any one of claims 1 to 4, wherein an amount of carbon is about 5 wt% to about 45 wt% based on the total weight of the negative active material.

6. The negative active material for a rechargeable lithium battery of any one of claims 1 to 5, wherein the porous silicon-carbon composite includes pores and the carbon is covered on an exterior wall of pores, silicon, and magnesium silicate,
optionally wherein the pores have an average size of about 50 nm or more;
optionally wherein the pores have an average size of about 50 nm to 500 nm, and
wherein the pore size is measured by a nitrogen adsorption method or mercury porosimetry.

7. The negative active material for a rechargeable lithium battery of any one of claims 1 to 6, wherein the negative active material was prepared by
primarily heat-treating magnesium silicide to prepare a heated product,
etching the heated product to prepare a porous silicon,
mixing the porous silicon with an amorphous carbon precursor to prepare a mixture and control the generated pore size, and
secondarily heat-treating the mixture to convert the amorphous carbon precursor to an amorphous carbon.

8. The negative active material for a rechargeable lithium battery of claim 7, wherein the primary heat treatment is performed under an air atmosphere.

9. The negative active material for a rechargeable lithium battery of claim 7, wherein primary heat treatment is performed at about 600 °C to about 700°C for about 5 hours to about 30 hours.

10. The negative active material for a rechargeable lithium battery of any one of claims 6 to 9, wherein the etching is performed using an acid;
optionally wherein the acid is hydrochloric acid.

11. The negative active material for a rechargeable lithium battery of any one of claims 6 to 10, wherein a mixing ratio of the porous silicon and the amorphous carbon precursor is about 95:5 to about 55:45 by weight ratio.

12. The negative active material for a rechargeable lithium battery of any one of claims 6 to 11, wherein the secondary heat treatment is performed at about 800 °C to about 1200 °C.

13. A rechargeable lithium battery comprising:
a negative electrode comprising a negative active material according to any one of claims 1 to 12;
a positive electrode comprising a positive active material; and
a non-aqueous electrolyte

14. The rechargeable lithium battery of claim 13, wherein the negative electrode comprises the negative active material as a first negative active material and crystalline carbon as a second negative active material.

15. The rechargeable lithium battery of claim 14, wherein a mixing ratio of the first negative active material and the second negative active material is about 1 : 99 to about 40 : 60 by weight ratio.

## Patentansprüche

1. Negatives Aktivmaterial für eine wiederaufladbare Lithiumbatterie, umfassend:
einen porösen Silizium-Kohlenstoff-Verbundstoff, umfassend Silizium, Kohlenstoff und Magnesiumsilikat, MgSiOs,
aufweisend ein Beugungspeakintensitätsverhältnis I_{MgSiO3(610)}/I_{Si(111)} von 0,001 < I_{MgSiO3(610)}/I_{Si(111)} < 0,01, welches ein Verhältnis einer Beugungspeakintensität I_{MgSiO3(610)} durch MgSiOs bei 2θ = 30° bis 32° zu einer Beugungspeakintensität I_{Si(111)} durch Si(111), erfasst bei 2θ = 27,5° bis 29,5° in einer Röntgenbeugungsanalyse, ist.

2. Negatives Aktivmaterial für eine wiederaufladbare Lithiumbatterie nach Anspruch 1, wobei eine Menge von Magnesiumsilikat in etwa 0,01 Gew.-% bis in etwa 1,0 Gew.-% oder in etwa 0,01 Gew.-% bis in etwa 0,6 Gew.-% auf Grundlage einer Gesamtheit von 100 Gew.-% des negativen Aktivmaterials beträgt.

3. Negatives Aktivmaterial für eine wiederaufladbare Lithiumbatterie nach Anspruch 1 oder 2, wobei der Kohlenstoff amorphen Kohlenstoff umfasst.

4. Negatives Aktivmaterial für eine wiederaufladbare Lithiumbatterie nach Anspruch 3, wobei der amorphe Kohlenstoff weichen Kohlenstoff, harten Kohlenstoff oder eine Mischung daraus umfasst.

5. Negatives Aktivmaterial für eine wiederaufladbare Lithiumbatterie nach einem der Ansprüche 1 bis 4, wobei eine Menge von Kohlenstoff in etwa 5 Gew.-% bis in etwa 45 Gew.-% auf Grundlage des Gesamtgewichts des negativen Aktivmaterials beträgt.

6. Negatives Aktivmaterial für eine wiederaufladbare Lithiumbatterie nach einem der Ansprüche 1 bis 5, wobei der poröse Silizium-Kohlenstoff-Verbundstoff Poren umfasst und der Kohlenstoff auf einer Außenwand von Poren, Silizium und Magnesiumsilikat abgedeckt ist,
wobei optional die Poren eine Durchschnittsgröße von in etwa 50 nm oder mehr aufweisen;
wobei optional die Poren eine Durchschnittsgröße von in etwa 50 nm bis 500 nm aufweisen und
wobei die Porengröße durch ein Stickstoffadsorptionsverfahren oder Quecksilberporosimetrie gemessen wird.

7. Negatives Aktivmaterial für eine wiederaufladbare Lithiumbatterie nach einem der Ansprüche 1 bis 6, wobei das negative Aktivmaterial hergestellt wurde durch: erstes Wärmebehandeln von Magnesiumsilikat, um ein erwärmtes Produkt herzustellen,
Ätzen des erwärmten Produkts, um ein poröses Silizium herzustellen,
Mischen des porösen Siliziums mit einem amorphen Kohlenstoffvorläufer, um ein Gemisch herzustellen und die erzeugte Porengröße zu steuern, und
zweites Wärmebehandeln des Gemisches, um den amorphen Kohlenstoffvorläufer in einen amorphen Kohlenstoff umzuwandeln.

8. Negatives Aktivmaterial für eine wiederaufladbare Lithiumbatterie nach Anspruch 7, wobei die erste Wärmebehandlung unter einer Luftatmosphäre durchgeführt wird.

9. Negatives Aktivmaterial für eine wiederaufladbare Lithiumbatterie nach Anspruch 7, wobei die erste Wärmebehandlung bei in etwa 600 °C bis in etwa 700 °C für in etwa 5 Stunden bis in etwa 30 Stunden durchgeführt wird.

10. Negatives Aktivmaterial für eine wiederaufladbare Lithiumbatterie nach einem der Ansprüche 6 bis 9, wobei das Ätzen unter Verwendung einer Säure durchgeführt wird;
wobei optional die Säure Salzsäure ist.

11. Negatives Aktivmaterial für eine wiederaufladbare Lithiumbatterie nach einem der Ansprüche 6 bis 10, wobei ein Mischverhältnis des porösen Siliziums und des amorphen Kohlenstoffvorläufers in etwa 95:5 bis in etwa 55:45 nach Gewichtsverhältnis ist.

12. Negatives Aktivmaterial für eine wiederaufladbare Lithiumbatterie nach einem der Ansprüche 6 bis 11, wobei die zweite Wärmebehandlung bei in etwa 800 °C bis in etwa 1200 °C durchgeführt wird.

13. Wiederaufladbare Lithiumbatterie, umfassend:
eine negative Elektrode, die ein negatives Aktivmaterial nach einem der Ansprüche 1 bis 12 umfasst;
eine positive Elektrode, die ein positives Aktivmaterial umfasst; und
einen nichtwässrigen Elektrolyten.

14. Wiederaufladbare Lithiumbatterie nach Anspruch 13, wobei die negative Elektrode das negative Aktivmaterial als ein erstes negatives Aktivmaterial und kristallinen Kohlenstoff als ein zweites negatives Aktivmaterial umfasst.

15. Wiederaufladbare Lithiumbatterie nach Anspruch 14, wobei ein Mischverhältnis des ersten negativen Aktivmaterials und des zweiten negativen Aktivmaterials in etwa 1:99 bis in etwa 40:60 nach Gewichtsverhältnis ist.

## Revendications

1. Matériau actif négatif pour une batterie au lithium rechargeable, comprenant
un composite silicium-carbone poreux comprenant du silicium, du carbone et du silicate de magnésium, MgSiOs,
ayant un rapport d'intensité de pic de diffraction I_{MgSiO3(610)}/I_{Si(111)} de 0,001 < I_{MgSiO3(610)}/I_{Si(111)} < 0,01, qui est un rapport d'une intensité de pic de diffraction I_{MgSiO3(610)} par MgSiOs à 20 = 30° à 32° à une intensité de pic de diffraction I_{Si(111)} par Si(111) détectée à 20 = 27,5° à 29,5° dans une analyse par diffraction des rayons X.

2. Matériau actif négatif pour une batterie au lithium rechargeable selon la revendication 1, dans lequel une quantité de silicate de magnésium est d'environ 0,01 % en poids à environ 1,0 % en poids ou d'environ 0,01 % en poids à environ 0,6 % en poids sur la base du total de 100 % en poids du matériau actif négatif.

3. Matériau actif négatif pour une batterie au lithium rechargeable selon la revendication 1 ou 2, dans lequel le carbone comporte du carbone amorphe.

4. Matériau actif négatif pour une batterie au lithium rechargeable selon la revendication 3, dans lequel le carbone amorphe comporte du carbone doux, du carbone dur ou une combinaison de ceux-ci.

5. Matériau actif négatif pour une batterie au lithium rechargeable selon l'une quelconque des revendications 1 à 4, dans lequel une quantité de carbone est d'environ 5 % en poids à environ 45 % en poids sur la base du poids total du matériau actif négatif.

6. Matériau actif négatif pour une batterie au lithium rechargeable selon l'une quelconque des revendications 1 à 5, dans lequel le composite silicium-carbone poreux comporte des pores et le carbone est recouvert sur une paroi extérieure de pores, de silicium et de silicate de magnésium,
facultativement dans lequel les pores ont une taille moyenne d'environ 50 nm ou plus ;
facultativement dans lequel les pores ont une taille moyenne d'environ 50 nm à 500 nm, et
dans lequel la taille de pore est mesurée par un procédé d'adsorption d'azote ou par porosimétrie au mercure.

7. Matériau actif négatif pour une batterie au lithium rechargeable selon l'une quelconque des revendications 1 à 6, dans lequel le matériau actif négatif a été préparé par
traitement thermique primaire de siliciure de magnésium pour préparer un produit chauffé,
attaque du produit chauffé pour préparer un silicium poreux,
mélange du silicium poreux à un précurseur de carbone amorphe pour préparer un mélange et contrôler la taille de pore générée, et
traitement thermique secondaire du mélange pour convertir le précurseur de carbone amorphe en un carbone amorphe.

8. Matériau actif négatif pour une batterie au lithium rechargeable selon la revendication 7, dans lequel le traitement thermique primaire est réalisé sous une atmosphère d'air.

9. Matériau actif négatif pour une batterie au lithium rechargeable selon la revendication 7, dans lequel un traitement thermique primaire est réalisé à environ 600 °C à environ 700 °C pendant environ 5 heures à environ 30 heures.

10. Matériau actif négatif pour une batterie au lithium rechargeable selon l'une quelconque des revendications 6 à 9, dans lequel l'attaque est réalisée en utilisant un acide ;
facultativement dans lequel l'acide est de l'acide chlorhydrique.

11. Matériau actif négatif pour une batterie au lithium rechargeable selon l'une quelconque des revendications 6 à 10, dans lequel un rapport de mélange du silicium poreux et du précurseur de carbone amorphe est d'environ 95:5 à environ 55:45 par rapport en poids.

12. Matériau actif négatif pour une batterie au lithium rechargeable selon l'une quelconque des revendications 6 à 11, dans lequel le traitement thermique secondaire est réalisé à environ 800 °C à environ 1 200 °C.

13. Batterie au lithium rechargeable comprenant :
une électrode négative comprenant un matériau actif négatif selon l'une quelconque des revendications 1 à 12 ;
une électrode positive comprenant un matériau actif positif ; et
un électrolyte non aqueux.

14. Batterie au lithium rechargeable selon la revendication 13, dans laquelle l'électrode négative comprend le matériau actif négatif en tant que premier matériau actif négatif et du carbone cristallin en tant que deuxième matériau actif négatif.

15. Batterie au lithium rechargeable selon la revendication 14, dans laquelle un rapport de mélange du premier matériau actif négatif et du deuxième matériau actif négatif est d'environ 1:99 à environ 40:60 en rapport en poids.
